# EUROPEAN PATENT APPLICATION

(11) **EP 4 292 686 A1**
(43) Date of publication of application: **20.12.2023**
(21) Application number: 21925537.9
(22) Date of filing: 28.12.2021
(51) Int. Cl.: A63J 21/00, G03H 1/00, G03B 29/00

(54) **DEVICE AND METHOD FOR COMMUNICATION WITH DECEASED PERSONS**

(30) Priority: 09.02.2021 ES 202130245 U
(71) Applicant: Ugolino Alcantara, Crishtian Horacio, 07458 Platja de Muro (ILLES BALEARS) (ES)
(72) Inventor: Ugolino Alcantara, Crishtian Horacio, 07458 Platja de Muro (ILLES BALEARS) (ES)
(74) Representative: Espiell Gomez, Ignacio
(86) International application number: PCT/ES2021/070941
(87) International publication number: WO 2022/171913

(57) **Abstract**

A device and method for communication with deceased persons, where the device comprises, within a casing (1): a holographic projector (5), a wireless communication system (6), a loudspeaker (3), a microphone (8), a display (2), a control unit (7) with a database that stores information on the deceased person and a software that generates audio responses based on words or sentences pronounced by the user, and an electrical power supply (9); and the method: a stage of capturing the voice of a user who wishes to communicate with the deceased person, and another stage of generating visual and/or audio responses by the deceased person based on the words and sentences of the user, captured by the microphone (8) and which are reproduced by means of the holographic projector (5) and/or the loudspeaker (3).

## Description

### OBJECT OF THE INVENTION

The invention, as expressed in the title of the present specification, relates to a device and method for communication with deceased persons that provides advantages and features, which are described in detail below and represent an innovation unknown up until now within the current techniques.

The object of the present invention relates, on the one hand, to a device for communication with deceased persons that essentially comprises, housed in a casing, a holographic projector that projects a holography of the person in question, and also a wireless communication system, a microphone, a loudspeaker, a display and a control unit with a database that stores information on the deceased person and software that generates audio responses based on words or sentences pronounced by the user and captured by the microphone, asz well as an electrical power supply. And, on the other hand, it relates to a method for communication with deceased persons comprising at least a stage of capturing the voice of the user and a stage of generating visual and/or audio responses of the deceased person, and, preferably, also a prior stage of capturing visual and/or audio characteristics of a person to generate a database which later, when the person dies, are used to generate the visual and/or audio responses of the deceased person.

### FIELD OF APPLICATION OF THE INVENTION

The field of application of the present invention falls within the sector of the industry dedicated to the manufacture of souvenir items and devices for communication.

### BACKGROUND OF THE INVENTION

As is well known, when a loved one dies, it leaves a void in the family that is difficult to overcome.

This originates the desire of relatives to be able to see their loved one as if they were in front of them, even being able to hear their voice again and communicate with them.

The present invention aims to solve the problems arising from the factors and circumstances described above.

As a reference to the current state of the art, it should be noted that, at least by the applicant, the existence of any invention that has characteristics similar to those that characterize the present invention is unknown.

### DESCRIPTION OF THE INVENTION

The device and method for communication with deceased persons proposed by the invention are configured as the ideal solution to the aforementioned objective, the characterizing details that make it possible and that distinguish them being suitably set out in the final claims attached to the present description.

The device of the present invention allows its user to be able to communicate with a deceased loved one, in addition to being able to see their silhouette through the holographic projection.

It also has the functionality of being able to reproduce the voice of the deceased person simulating a conversation with the user.

For this, the device for communication with deceased persons proposed by the invention, as previously noted, essentially comprises, housed in a casing, a holographic projector that projects a holography of the deceased person in question, together with a wireless communication system, a microphone, a loudspeaker, a display and a control unit with a database that stores previously recorded information on the deceased person and with software that generates audio responses with elements from the database based on words or sentences pronounced by the user and captured by the microphone, also having an electrical power supply.

More specifically, the device comprises a loudspeaker that reproduces the voice of the deceased person, a microphone that captures the voice of the user who wishes to communicate with the deceased person, a database that stores visual and audio information on the deceased person, and a software that generates audio responses from the deceased person based on the words and sentences captured by the user's microphone and reproduces them by means of the loudspeaker

In turn, the holographic projector projects a holography of the deceased person on the outside of the casing and the software generates visual responses of the deceased person based on the words and sentences captured by the user's microphone and reproduces them by means of the holographic projector.

In turn, the wireless communication system allows the device to be able to exchange information with an electronic device through a mobile application.

The mobile application will allow the user to have different functionalities and operation of the device.

The electronic device can be a mobile telephone, a digital tablet or the like.

A second aspect of the invention has as its object a method for communication with deceased persons by means of a device such as the one described above, which essentially comprises the following stages:
- Capturing the voice of a user who wishes to communicate with the deceased person.
- Generating visual and/or audio responses by the deceased person based on the words and sentences of the user, captured by the microphone and which are reproduced by means of the holographic projector and/or the loudspeaker.

In addition, preferably, said method also comprises a prior stage of capturing visual and/or audio characteristics of a person to generate a database which later, when the person dies, are used to generate the visual and/or audio responses of the deceased person, based on the words and sentences of the user captured by the microphone.

### DESCRIPTION OF THE DRAWINGS

To complement the description that is being made and for the purpose of aiding to better understand the features of the invention, a drawing is attached to the present specification as an integral part thereof, in which the following is depicted in an illustrative and non-limiting manner:

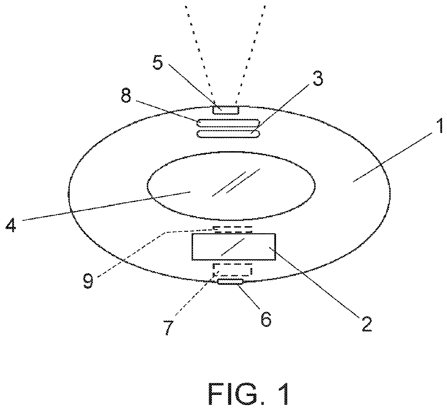

Figure 1 shows a schematic depiction of an example of the device for communication with deceased persons object of the invention.

### PREFERRED EMBODIMENT OF THE INVENTION

In view of the described and only Figure 1, and in accordance with the numbering adopted, a non-limiting exemplary embodiment of the device for communication with deceased persons of the invention, which comprises what is described in detail below, can be seen in said figure.

Thus, as shown in said figure, the device of the invention is made up of a casing (1) that houses a holographic projector (5) therein that projects a holography on the outside. The holography will correspond to the outline of the deceased person.

The device also has inside the casing (1) a wireless communication system (6), a control unit (7), a display (2) to operate the device, a microphone (8) that captures the voice of the user who wants to communicate with the deceased person, a loudspeaker (3) that reproduces the voice of the deceased person and an electrical power supply (9).

The control unit (7) incorporates a database that stores previously recorded information on the deceased person and software that generates and reproduces audio responses of the deceased person using the loudspeaker (3) with elements from the database based on words or sentences pronounced by the user captured by the microphone (8).

The wireless communication system (6) will preferably be via Bluetooth.

The casing (1) may have a screen (4) to be able to view photographs or videos in two dimensions.

The electrical power supply (9) will preferably be by means of a battery, in order to be able to move the device freely, without cables.

Preferably the screen (4) is a touch screen to make operation of the device more intuitive.

Having sufficiently described the nature of the present invention, as well as the way of putting it into practice, it is not considered necessary to further expand on its explanation so that any expert in the field can understand its scope and the advantages derived from it.

## Claims

1. A device for communication with deceased persons, **characterized by** comprising, housed in a casing (1):
- a holographic projector (5) that projects a holography of the deceased person on the outside;
- a wireless communication system (6);
- a loudspeaker (3) that reproduces the voice of the deceased person;
- a microphone (8) that captures the voice of the user who wishes to communicate with the deceased person;
- an operating display (2);
- a control unit (7) which, in turn, has:
- a database that stores previously recorded information of the deceased person, and
- software that generates audio responses with elements from the database based on words or sentences pronounced by the user and captured by the microphone (5);
- and an electrical power supply (9).

2. The device for communication with deceased persons according to claim 1, **characterized in that** the wireless communication system (8) is via Bluetooth.

3. The device for communication with deceased persons according to claim 1 or 2, **characterized in that** the casing (1) has a screen (4) to view photographs or videos in two dimensions.

4. The device for communication with deceased persons according to claim 3, **characterized in that** the screen (4) is a touch screen.

5. The device for communication with deceased persons according to any of the preceding claims, **characterized in that** the electrical power supply (9) is a battery.

6. A method for communication with deceased persons by means of a device as described in any of claims 1 to 5, **characterized in that** it comprises at least:
- a stage of capturing the voice of a user who wishes to communicate with the deceased person; and
- a stage of generating visual and/or audio responses by the deceased person based on the words and sentences of the user, captured by the microphone (8) and which are reproduced by means of the holographic projector (5) and/or the loudspeaker (3).

7. The method for communication with deceased persons according to claim 6, **characterized in that** it comprises a prior stage of capturing visual and/or audio characteristics of a person to generate a database which later, when the person dies, are used to generate the visual and/or audio responses of the deceased person, based on the words and sentences of the user captured by the microphone (8).
